# EUROPEAN PATENT APPLICATION

(11) **EP 4 333 170 A1**
(43) Date of publication of application: **06.03.2024**
(21) Application number: 22906218.7
(22) Date of filing: 24.11.2022
(51) Int. Cl.: H01M 50/184, H01M 50/186, H01M 50/109, H01M 50/153, H01M 50/636

(54) **BATTERY**

(30) Priority: 17.12.2021 CN 202111553172
(71) Applicant: Zhuhai CosMX Battery Co., Ltd., Zhuhai, Guangdong 519180 (CN)
(72) Inventor: WANG, Zhifeng, Zhuhai, Guangdong 519180 (CN); PENG, Ning, Zhuhai, Guangdong 519180 (CN)
(74) Representative: PPR AG
(86) International application number: PCT/CN2022/134176
(87) International publication number: WO 2023/109467

(57) **Abstract**

The present invention provides a battery, including a conductive shell and a cover plate assembly, the cover plate assembly and the conductive shell enclose a chamber. The conductive shell or the cover plate assembly are provided with a liquid injection hole communicating with the chamber, a sealing member is disposed on the liquid injection hole to seal the liquid injection hole. A first welding seam and a second welding seam are formed on the sealing member respectively, the first welding seam has a first head end and a first tail end, the second welding seam has a second head end and a second tail end, where the first head end is connected to the second tail end, the second head end is connected to the first tail end, the sealing member is connected to the conductive shell or the cover plate assembly by the first welding seam and the second welding seam. That is, the welding seam for achieving the connection between the sealing member and a conductive top cover is a welding seam of two sections; and by performing welding as sections, there may be an interval of a preset time between the first welding seam and the second welding seam, such that the first welding seam can sufficiently dissipate heat, so as to reduce the heat accumulation of the welding seam, and reduce or avoid the occurrence of the phenomenon of yellowing and bursting points, thereby improving battery yield.

## Description

The present application claims priority to Chinese Patent Application No. 202111553172.8, entitled with "BATTERY", filed with CNIPA on December 17, 2021, the disclosure of which is incorporated in the present application by reference in its entirety.

### TECHNICAL FIELD

The present application relates to the field of battery technology and, in particular, to a battery.

### BACKGROUND

Battery is a component that converts chemical energy into electrical energy, which has a very wide range of applications in daily life and work. For example, button cells are commonly used in various electronic devices such as electronic watch, Bluetooth headset, and electric toy, to provide power supply for electronic devices. It takes up a very important status in the life and work of people.

A button cell includes a conductive shell and a cover plate assembly, the cover plate assembly and the conductive shell enclose to form a chamber, the chamber is provided with an electrolyte solution. The conductive shell or the cover plate assembly is provided with a liquid injection hole, the electrolyte solution is injected into the chamber through the liquid injection hole, the liquid injection hole is welded with a sealing member to seal the liquid injection hole. Usually, the welding between the sealing member and the cover plate assembly or the conductive shell mostly is performed in one-time welding manner, the structure of a welding seam is of one-time formation without pausing at intermediate times, and the whole welding process takes about 60-70 milliseconds from a head end of the welding seam to a tail end of the welding seam, so that a continuous annular welding seam is formed on the sealing member, and in order to ensure the sealing performance, the head and tail ends of the welding seam usually are partially overlapped.

However, the one-time formation of the welding seam structure results in higher heat accumulation, yellowing and even bursting points are prone to occur at the head and tail ends of the welding seam, thereby affecting battery yield.

### SUMMARY

The present invention provides a battery to solve the problem in existing batteries that one-time formation of welding seam structures results in higher heat accumulation, yellowing and even bursting points are prone to occur at head and tail ends of welding seams to affect battery yield.

The present application provides a battery, including a conductive shell and a cover plate assembly, the cover plate assembly is disposed on the conductive shell, the cover plate assembly and the conductive shell enclose to form a chamber, the conductive shell or the cover plate assembly is provided with a liquid injection hole communicating with the chamber, and a sealing member is disposed on the liquid injection hole to seal the liquid injection hole.

A first welding seam and a second welding seam are formed on the sealing member respectively, the first welding seam has a first head end and a first tail end, the second welding seam has a second head end and a second tail end, the first head end is connected to the second tail end, the second head end is connected to the first tail end, and the sealing member is connected to the conductive shell or the cover plate assembly by the first welding seam and the second welding seam.

That is, the welding seam for achieving the connection between the sealing member and the conductive top cover is a welding seam of two sections, and the two welding seam sections are respectively formed and connected in head-to-tail manner. In other words, when the sealing member is connected to the conductive top cover in a welding manner, the welding is performed as sections, and two welding seam sections are formed on the sealing member and the conductive top cover, and in an actual welding operation, there may be an interval of a preset time between the formation of the first welding seam and the formation of the second welding seam.

This enables the first welding seam to be sufficiently cooled by means of heat dissipation, and then the second welding seam is formed, thereby effectively reducing or avoiding heat accumulation, that is, reducing the heat of the welding seams, and effectively reducing or avoiding the occurrence of bursting points at connected portions when the first welding seam and the second welding seam are connected at head and tail ends thereof, and effectively improving battery yield. Meanwhile, the situation in which the electrolyte solution is subjected to heating can be relieved, and the phenomenon of vaporization of the electrolyte solution can be reduced or avoided, thereby effectively preventing the situation in which the head and tail ends of the welding seam are yellowed, and further improving battery yield.

In a possible implementation, the cover plate assembly includes a conductive top cover and a cover plate, the cover plate is disposed on the conductive shell, the conductive top cover is disposed on the cover plate in an insulation manner, the liquid injection hole is located in the conductive top cover, and the liquid injection hole penetrates through the conductive top cover.

In a possible implementation, a weld penetration depth of each of the first welding seam and the second welding seam is greater than a thickness of the sealing member and less than a sum of the thickness of the sealing member and a thickness of the conductive shell; or,
the weld penetration depth of each of the first welding seam and the second welding seam is greater than the thickness of sealing member and less than the sum of the thickness of the sealing member and the thickness of the conductive top cover.

In a possible implementation, each of the first welding seam and the second welding seam has a shape of circular arc, and the first welding seam and the second welding seam are concentrically disposed.

In a possible implementation, the first head end is partially overlapped with the second tail end, and/or the second head end is partially overlapped with the first tail end.

In a possible implementation, the sealing member includes a sealing portion and a connecting portion disposed to surround an out periphery of the sealing portion, and the sealing portion is opposite to the liquid injection hole;
a thickness of the connecting portion is less than a thickness of the sealing portion, and the first welding seam and the second welding seam are located on the connecting portion.

In a possible implementation, overlapped portions of the first tail end and the second head end have a central angle in a degree range from 0° to 30°; and/or,
overlapped portions of the second tail end and the first head end have a central angle in a degree range from 0° to 30°.

In a possible implementation, the first welding seam has a central angle in a degree range from 180° to 240°, and/or the second welding seam has a central angle in a degree range from 120° to 240°.

In a possible implementation, the first welding seam has an inner diameter in a range from 3.6 mm to 4 mm, and the first welding seam has an outer diameter in a range from 4 mm to 4.4 mm; and/or,
the second welding seam has an inner diameter in a range from 3.6 mm to 4 mm, and the second welding seam has an outer diameter in a range from 4 mm to 4.4 mm.

In a possible implementation, a surface of the conductive top cover facing away from the conductive shell is provided with a first recess portion, and the sealing member (50) is located within the first recess portion.

In a possible implementation, each of the first welding seam and the second welding seam has a protrusion on a surface of the sealing member facing away from the conductive shell, and a vertex of the protrusion is lower than the surface of the conductive top cover facing away from the conductive shell.

In a possible implementation, a second recess portion is further provided within the first recess portion, and the liquid injection hole is located in the second recess portion.

### BRIEF DESCRIPTION OF DRAWINGS

To illustrate the technical solutions in embodiments of the present application or in the prior art more clearly, the following briefly introduces the accompanying drawings required for describing the embodiments or the prior art. Apparently, the accompanying drawings in the following description illustrate merely some embodiments of the present application, and persons of ordinary skill in the art may still derive other drawings from these accompanying drawings without creative effort.
FIG. 1 is a structural schematic diagram of a battery provided in an embodiment of the present application.
FIG. 2 is an exploded structural schematic diagram of a battery provided in an embodiment of the present application.
FIG. 3 is an enlarged view of region A in FIG. 1.
FIG. 4 is a top view of a battery provided in an embodiment of the present application.
FIG. 5 is a structural schematic diagram of a conductive top cover provided in an embodiment of the present application.
FIG. 6 is a structural schematic diagram of a sealing member provided in an embodiment of the present application.
FIG. 7 is a structural schematic diagram of another sealing member provided in an embodiment of the present application.
FIG. 8 is a schematic diagram in which a first welding seam and a second welding seam are disposed on another sealing member provided in an embodiment of the present application.

### Description of reference numbers:

100-battery;
10-conductive shell;
11-chamber;
20-cover plate assembly;
21-conductive top cover;
211 -first recess portion;
212-second recess portion;
22-cover plate;
23-liquid injection hole;
30-second insulating member;
40-first insulating member;
50-sealing member;
51-sealing portion;
52-connecting portion;
60-battery cell;
61-positive electrode tab;
70-first welding seam;
71-first head end;
72-first tail end;
80-second welding seam;
81-second head end;
82-second tail end.

### DESCRIPTION OF EMBODIMENTS

To make the objectives, technical solutions, and advantages of embodiments of the present application clearer, the following clearly and comprehensively describes the technical solutions in embodiments of the present application with reference to the accompanying drawings in embodiments of the present application. Apparently, the described embodiments are merely a part rather than all embodiments of the present application. All other embodiments obtained by persons of ordinary skill in the art based on embodiments of the present application without creative effort shall fall within the protection scope of the present application.

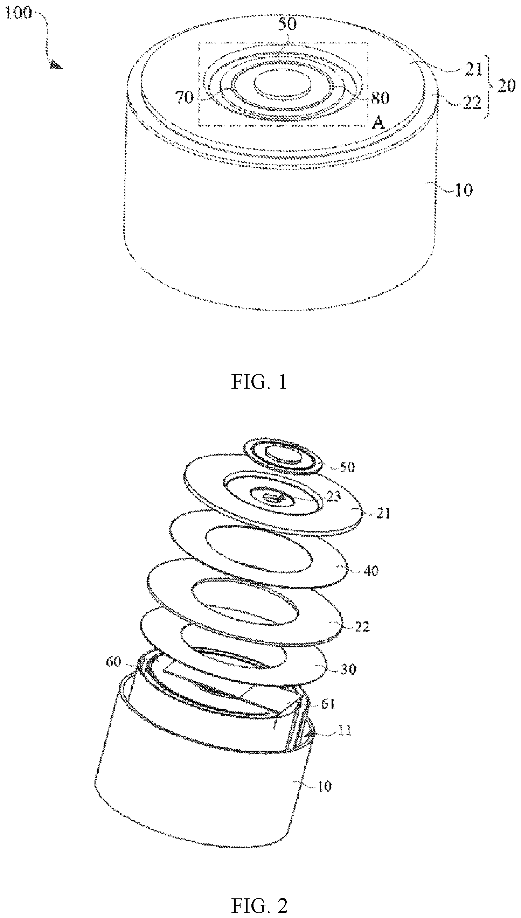

FIG. 1 is a structural schematic diagram of a battery provided in an embodiment of the present application; and FIG. 2 is an exploded structural schematic diagram of a battery provided in an embodiment of the present application.

In an embodiment of the present application, a battery used as a button battery is taken as an example for illustration. Referring to FIG. 1, a battery 100 includes a conductive shell 10 and a cover plate assembly 20, the cover plate assembly 20 covers on the conductive shell 10, the cover plate assembly 20 and the conductive shell 10 enclose to form a chamber 11. Specifically, it can be seen in combination with FIG. 2 that the cover plate assembly 20 may include a conductive top cover 21 and a cover plate 22, the cover plate 22 has a shape of an annular structure, and the cover plate 22 may cover on the conductive shell 10.

The conductive top cover 21 is disposed on the cover plate 22, and the conductive top cover 21 and the cover plate 22 are connected in an insulation manner. Specifically, for example, a first insulating member 40 may be disposed between the conductive top cover 21 and the cover plate 22, and the first insulating member 40 may isolate the conductive top cover 21 from the cover plate 22 in an insulation manner to prevent the conductive top cover 21 from electrically contacting the cover plate 22 to cause short circuit of the battery 100, thereby effectively improving the safety of the battery 100.

A battery cell 60 and an electrolyte solution (not shown) may be provided in the chamber 11 of the battery 100, the battery cell 60 may chemically react in the electrolyte solution, thereby generating electrical energy. The battery cell 60 may include a positive electrode tab 61 and a negative electrode tab (not shown). The positive electrode tab 61 may be electrically connected to the conductive top cover 21, and the negative electrode tab may be electrically connected to the conductive shell 10, so as to make the conductive top cover 21 used as a positive electrode end of the battery 100, and make the conductive shell 10 used as a negative electrode end of the battery 100.

Certainly, in some examples, the positive electrode tab 61 may also be electrically connected to the conductive shell 10, and the negative electrode tab is electrically connected to the conductive top cover 21, so as to make the conductive shell 10 used as the positive electrode end of the battery 100, and make the conductive top cover 21 used as the negative electrode end of the battery 100. In an embodiment of the present application, an example is illustrated in which the positive electrode tab 61 is electrically connected to the conductive top cover 21 and the negative electrode tab is electrically connected to the conductive shell 10.

A second insulating member 30 may further be disposed between the battery cell 60 and the cover plate 22, the second insulating member 30 may isolate the battery cell 60 and the positive electrode tab 61 from the cover plate 22 in an insulating manner to prevent the battery cell 60 or the positive electrode tab 61 from electrically contacting the cover plate 22, thereby reducing or avoiding short circuit occurred in the battery 100 due to electrical contact between the battery cell 60 or the positive electrode tab 61 and the cover plate 22, and further improving the safety of the battery 100.

The conductive shell 10 or the cover plate assembly 20 is further provided with a liquid injection hole 23, that is, the liquid injection hole 23 may be disposed in the conductive shell 10, or the liquid injection hole 23 may also be disposed in the cover plate assembly 20. The liquid injection hole 23 is communicated with the chamber 11 of the battery 100, and the electrolyte solution may be injected into the chamber 11 through the liquid injection hole 23. The sealing member 50 is further disposed on the liquid injection hole 23, and the sealing member 50 is configured to seal the liquid injection hole 23 to prevent the electrolyte solution from leaking.

It should be understood that the function of the sealing member 50 is to seal the liquid injection hole 23, and thus, the setting position of the sealing member 50 is related to the setting position of the liquid injection hole 23. That is, when the liquid injection hole 23 is disposed in the cover plate assembly 20, the sealing member 50 may be disposed on the cover plate assembly 20, whereas when the liquid injection hole 23 is disposed in the conductive shell 10, the sealing member 50 may be disposed on the conductive shell 10.

The sealing member is usually disposed on the conductive shell or the cover plate assembly in a welding manner. For example, in the related art, the sealing member and the conductive top cover are connected by a continuous annular welding seam, where the welding seam is made in one-time welding mode, that is, the welding seam structure is of one-time formation without pausing at intermediate times, and usually, the whole welding process only takes 60-70 milliseconds from start to end. In order to ensure the sealing performance, the head and tail ends of the welding seam can be connected or even partially overlapped.

However, when the welding seam structure is formed at one time within an extremely short time, the heat accumulation is higher, and the electrolyte solution in the battery shell is easily vaporized due to being subjected to heating, thereby occurring the phenomenon of yellowing at positions of the head and tail ends of the welding seam. Meanwhile, the head and the tail ends of the welding seam are connected or overlapped, and the formation time of the welding seam is short, the heat dissipation time of the head and the tail ends is short, therefore, there is no effective heat dissipation, so that the connection or overlapping of the head and the tail ends may easily generate bursting points at portions of the welding seam where the head and tail ends of the welding seam are connected or overlapped, thereby seriously influencing the yield rate of the battery.

Based on the above-mentioned problems, an embodiment of the present application provides a battery, which can effectively reduce heat accumulation of the welding seam, reduce or avoid the occurrence of the phenomenon of yellowing or bursting points at the head and tail ends of the welding seam, and effectively improve the yield rate of the battery.

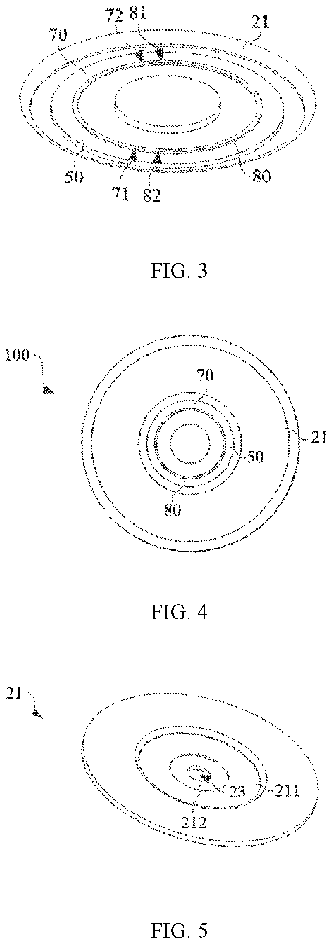

FIG. 3 is an enlarged view of region A in FIG. 1, and FIG. 4 is a top view of a battery provided in an embodiment of the present application.

Referring to FIG. 3 and FIG. 4, in an embodiment of the present application, the sealing member 50 is respectively formed with a first welding seam 70 and a second welding seam 80, where the first welding seam 70 and the second welding seam 80 may be formed by laser welding manner. The first welding seam 70 has a first head end 71 and a first tail end 72, the second welding seam 80 has a second head end 81 and a second tail end 82, the first head end 71 is connected to the second tail end 82, and the second head end 81 is connected to the first tail end 72, that is, the first welding seam 70 and the second welding seam 80 are sequentially connected in head-to-tail manner, so that the first welding seam 70 and the second welding seam 80 form a closed welding seam through the combination of splicing.

The first welding seam 70 and the second welding seam 80 both extend from the sealing member 50 to the conductive shell 10 or the cover plate assembly 20, that is, the penetration depth of each of the first welding seam 70 and the second welding seam 80 is greater than the thickness of the sealing member 50, such that the sealing member 50 may be connected to the conductive shell 10 or the cover plate assembly 20 by the first welding seam 70 and the second welding seam 80.

That is, the welding seam for achieving the connection between the sealing member 50 and the conductive top cover 21 or the conductive shell 10 is a welding seam of two sections, and the two welding seam sections are separately formed and connected in head-to-tail manner. In other words, when the sealing member 50 is connected to the conductive top cover 21 in a welding manner, the welding is performed as sections, and the two welding seam sections are formed on the sealing member 50 and the conductive top cover 21, in this way, in an actual welding operation, there may be an interval of a preset time between the formation of the first welding seam 70 and the formation of the second welding seam 80.

For example, the first welding seam 70 can be formed first, and after the first welding seam 70 is completed, there may be an interval of a preset time, so that the first welding seam 70 is effectively cooled by means of heat dissipation, and then the second welding seam 80 is formed. This can effectively reduce heat accumulation of the welding seam, that is, reduce the heat of the welding seam, in particular the heat of the first head end 71 and the first tail end 72 of the first welding seam 70. When the head and tail ends of the first welding seam 70 and the second welding seam 80 are connected or overlapped, the occurrence of the situation of bursting points at connected portions can be effectively reduced or avoided, thereby effectively improving the yield rate of the battery. Meanwhile, the situation in which the electrolyte solution is subjected to heating can be relieved, and the phenomenon of vaporization of the electrolyte solution can be reduced or avoided, thereby effectively preventing the situation of yellowing at the head and tail ends of the welding seam, and further improving the yield rate of the battery 100.

Where, in an embodiment of the present application, when the liquid injection hole 23 is disposed in the cover plate assembly 20, the liquid injection hole 23 may be located in the conductive top cover 21, and the liquid injection hole 23 penetrates through the conductive top cover 21. Where, in some examples, the conductive top cover 21 may also be disposed at the bottom of the conductive shell 10, or the conductive top cover 21 may also be disposed at a side wall of the conductive shell 10. That is, when the liquid injection hole 23 is disposed in the conductive top cover 21, the arrangement of the liquid injection hole 23 may be changed according to different positions of the conductive top cover 21 disposed on the conductive shell 10.

When the liquid injection hole 23 is disposed in the conductive shell 10, the liquid injection hole 23 may be disposed in the bottom wall of the conductive shell 10, or the liquid injection hole 23 may also be disposed in the side wall of the conductive shell 10, or the liquid injection hole 23 may also be disposed in the top of the conductive shell 10. Specifically, the arrangement position of the liquid injection hole 23 may be selected and set according to the structural design or specific application scenario of the battery 100.

In an embodiment of the present application, when the liquid injection hole 23 is disposed in the conductive top cover 21, that is, when the sealing member 50 is welded on the conductive top cover 21, the weld penetration depth of each of the first welding seam 70 and the second welding seam 80 may be greater than the thickness of the sealing member 50 and less than the sum of the thicknesses of the sealing member 50 and the conductive top cover 21. This achieves the connection between the sealing member 50 and the conductive top cover 21 through the first welding seam 70 and the second welding seam 80, and meanwhile, prevents the welding seam from penetrating through the conductive top cover 21 to cause the welding seams to appear on a surface of the conductive top cover 21 facing the chamber 11, and avoids the occurrence of the welding seam on the surface of the conductive top cover 21 facing the chamber 11 to affect the electrical connection of the conductive top cover 21 and the tab (such as the positive electrode tab 61), thereby effectively improving the reliability and stability of the electrical connection between the tab and the conductive top cover 21.

Accordingly, when the liquid injection hole 23 is disposed in the conductive shell 10, that is, when the sealing member 50 is welded to the conductive shell 10, the weld penetration depth of each of the first welding seam 70 and the second welding seam 80 may be greater than the thickness of the sealing member 50 and less than the sum of the thicknesses of the sealing member 50 and the thicknesses of the conductive shell 10. This may avoid the welding seam from penetrating the conductive shell 10 to affect the electrical connection between the conductive shell 10 and the tab, thereby effectively improving the reliability and stability of the electrical connection between the conductive shell 10 and the tab.

For example, a situation in which the liquid injection hole 23 is disposed in the conductive top cover 21, that is, the sealing member 50 is welded on the conductive top cover 21 is taken as an example, a depth value at which each of the first welding seam 70 and the second welding seam 80 extends in the conductive top cover 21 may be 0.05 mm-0.2 mm, this may effectively ensure the reliability and firmness of the connection between the sealing member 50 and the conductive top cover 21, and meanwhile, effectively prevent the welding seam from penetrating through the conductive top cover 21.

A situation in which the liquid injection hole 23 is disposed in the conductive top cover 21, that is, the sealing member 50 is disposed on the conductive top cover 21 is taken as an example to illustrate the first welding seam 70 and the second welding seam 80 provided by embodiments of the present application in detail below.

In an embodiment of the present application, continuing to refer to FIG. 3, the shape of the first welding seam 70 and the shape of the second welding seam 80 may be both circular arc shape, and the first welding seam 70 and the second welding seam 80 are concentrically disposed. This may result in better connection of the first welding seam 70 and the second welding seam 80, effectively improve the sealing performance and reliability of connection between the first head end 71 and the second tail end 82 as well as between the second head end 81 and the first tail end 72, and improve the sealing performance between the sealing member 50 and the conductive top cover 21, thereby effectively improving the sealing effect of the sealing member 50 on the liquid injection hole 23, and further improving the performance of the battery 100.

Where, the first head end 71 and the second tail end 82 may be partially overlapped, and/or the second head end 81 and the first tail end 72 may be partially overlapped. Where, only the first head end 71 and the second tail end 82 may be partially overlapped, in this way, the sealing performance of the connection between the first head end 71 and the second tail end 82 can be further improved. Alternatively, only the second head end 81 and the first tail end 72 may be partially overlapped, in this way, the sealing performance of the connection between the second head end 81 and the first tail end 72 may be further improved. Alternatively, the first head end 71 and the second tail end 82 may be partially overlapped, and the second head end 81 and the first tail end 72 may be partially overlapped, in this way, the sealing performance of the connection between the first head end 71 and the second tail end 82 and the sealing performance of the connection between the second head end 81 and the first tail end 72 can be improved at the same time. That is, the sealing performance of the connection between the first welding seam 70 and the second welding seam 80 is further improved, thereby effectively improving the sealing performance of the connection between the sealing member 50 and the conductive top cover 21, and improving the performance of the battery 100.

Specifically, overlapped portions of the first tail end 72 and the second head end 81 have a central angle in a degree range from 0° to 30°, and/or overlapped portions of the second tail end 82 and the first head end 71 have a central angle in a degree range from 0° to 30°. Where, only the overlapped portions of the first tail end 72 and the second head end 81 may have a central angle in a degree range from 0° to 30°, or only the overlapped portions of the second tail end 82 and the first head end 71 may have a central angle in a degree range from 0° to 30°, or both the overlapped portions of the first tail end 72 and the second head end 81 as well as the overlapped portions of the second tail end 82 and the first head end 71 may have a central angle in a degree range from 0° to 30°. This may effectively ensure the overlapped area between the first tail end 72 and the second head end 81 and between the second tail end 82 and the first head end 71, thereby further improving the sealing performance of the connection between the head and tail ends of the first welding seam 70 and the second welding seam 80, and improving the sealing performance of the sealing member 50 on the liquid injection hole 23.

Meanwhile, this also can reduce or prevent the overlapped portions of the first welding seam 70 and the second welding seam 80 at the head and tail ends thereof from being too large to result in heat increasing, and effectively prevent the occurrence of the situation of yellowing and bursting points at the overlapped portions of the head and tail ends of the first welding seam 70 and the second welding seam 80, thereby further improving the performance of the battery 100.

In an embodiment of the present application, the first welding seam 70 has a central angle in a degree range from 180° to 240°, and/or the second welding seam 80 has a central angle in a degree range from 120° to 240°. Where, the first welding seam 70 may have a central angle in a degree range from 180° to 240°, and the head and tail ends of the second welding seam 80 are connected to the head and tail ends of the first welding seam 70. Alternatively, the second welding seam 80 may have a central angle in a degree range from 180° to 240°, and the first welding seam 70 is connected to the second welding seam 80 at the head and tail ends. Alternatively, the first welding seam 70 may have a central angle in a degree range from 180° to 240°, and the second welding seam 80 may have a central angle in a degree range from 120° to 240°. This may make neither the first welding seam 70 nor the second welding seam 80 too long, or prevent one of the first welding seam 70 and the second welding seam 80 from being too long, which can reduce or avoid the increase of heat due to the first welding seam 70 and/or the second welding seam 80 being too long, further reduce or prevent the occurrence of the situation of yellowing and bursting points at connected or overlapped portions of the head and tail ends of the first welding seam 70 and the second welding seam 80.

Where, the first welding seam 70 may have an inner diameter in a range from 3.6 mm to 4 mm, the first welding seam 70 may have an outer diameter in a range from 4 mm to 4.4 mm, and/or the second welding seam 80 may also have an inner diameter in a range from 3.6 mm to 4 mm, and the first welding seam 70 may also have an outer diameter in a range from 4 mm to 4.4 mm. Where, only the inner diameter of the first welding seam 70 may range from 3.6 mm to 4 mm, the outer diameter range of that may range from 4 mm to 4.4 mm, or only the inner diameter of the second welding seam 80 may range from 3.6 mm to 4 mm, the outer diameter range of that may range from 4 mm to 4.4 mm, or both the inner diameters of the first welding seam 70 and the second welding seam 80 may range from 3.6 mm to 4 mm, and the outer diameters of that may range from 4 mm to 4.4 mm. The first welding seam 70 and the second welding seam 80 within this size range may allow the sealing member 50 to be better connected to the conductive top cover 21, reduce or avoid the situation of false welding, thereby effectively improving the reliability and firmness of the connection between the conductive top cover 21 and the sealing member 50, and further improving the performance of the battery 100.

FIG. 5 is a structural schematic diagram of a conductive top cover provided by an embodiment of the present application.

In an embodiment of the present application, referring to FIG. 5, a side of the conductive top cover 21 facing away from the cover plate 22 may be provided with a first recess portion 211, and when the sealing member 50 is disposed on the conductive top cover 21, the sealing member 50 may be disposed within the first recess portion 211. When the sealing member 50 is disposed within the first recess portion 211, the occupied space of the sealing member 50 can be reduced, the increase of the thickness of the battery 100 can be reduced or avoided due to the setting of the sealing member 50, thereby facilitating the small design of the battery 100. Meanwhile, it is also helpful to reduce the weight of the battery 100.

Where, the shape of the first recess portion 211 may be circular, the first recess portion 211 may has a depth of 0.25 mm, and has a diameter of 4.6 mm, this may further reduce the weight of the battery 100, and meanwhile, further may make the sealing member 50 better disposed in the first recess portion 211, thereby effectively reducing or avoiding the influence of the sealing member 50 on the overall thickness of the battery 100.

When the first welding seam 70 and the second welding seam 80 are formed on the sealing member 50, each of the first welding seam 70 and the second welding seam 80 forms a protrusion on a surface of the sealing member 50 facing away from the conductive shell 10, where a vertex of the protrusion is lower than a surface of the conductive top cover 21 facing away from the conductive shell 10, that is, the first welding seam 70 and the second welding seam 80 are located within the first recess portion 211 and do not protrude out of the first recess portion 211. This may reduce or avoid the influence of the first welding seam 70 and the second welding seam 80 on the overall thickness of the battery 100, prevent the increase of the overall size of the battery 100 due to too large thickness of the protrusion of each of the first welding seam 70 and the second welding seam 80, thereby facilitating the lightweight design of the battery 100.

A second recess portion 212 is further provided within the first recess portion 211, and the liquid injection hole 23 may be disposed in the second recess portion 212. In this way, when the electrolyte solution is injected, the spilled electrolyte solution may be limited within the second recess portion 212, thereby reducing or avoiding the electrolyte solution from being spilled to the first recess portion 211, preventing the normal welding of the sealing member 50 from being affected due to that the electrolyte solution is spilled on the first recess portion 211, and further improving the reliability and stability of welding of the sealing member 50.

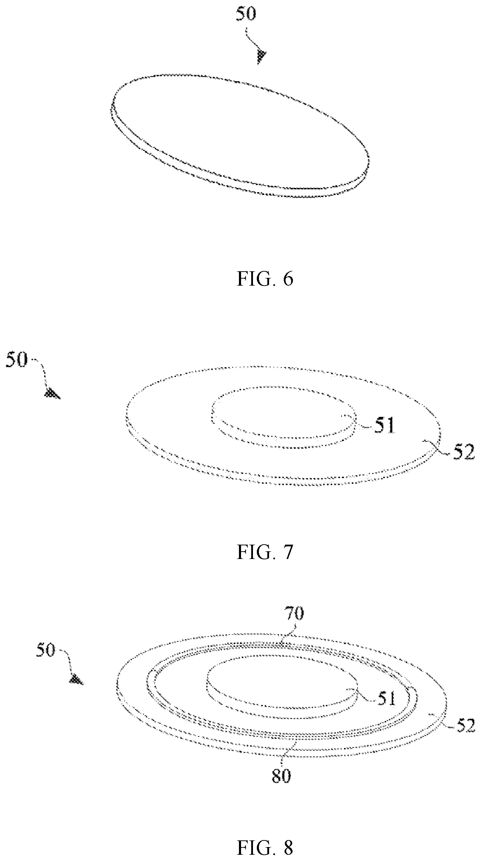

FIG. 6 is a structural schematic diagram of a sealing member provided in an embodiment of the present application, FIG. 7 is a structural schematic diagram of another sealing member provided in an embodiment of the present application, and FIG. 8 is a schematic diagram in which a first welding seam and a second welding seam are disposed on another sealing member provided in an embodiment of the present application.

Referring to FIG. 6, the shape of the sealing member 50 may be a flat plate structure, that is, the sealing member 50 is basically consistent in thickness, this may cause the structure of the sealing member 50 to be simplified, thereby reducing the design cost and processing cost of the sealing member 50, and improving economic benefit.

Where, the sealing member 50 may have a diameter of 4.4 mm, this may cause the sealing member 50 to fully cover the liquid injection hole 23, so as to improve sealing performance of the sealing member 50 to the liquid injection hole 23. The thickness of the sealing member 50 may be 0.15 mm, this way effectively improve the structural strength of the sealing member 50, thereby improving the reliability and firmness of the connection between the sealing member 50 and the conductive top cover 21, and further improving the sealing performance of the sealing member 50 to the liquid injection hole 23.

Alternatively, the shape of the sealing member 50 may also be other structures, for example, referring to FIG. 7, the sealing member 50 may include a sealing portion 51 and a connecting portion 52 disposed to surround an out periphery of the sealing portion 51, and when the sealing member 50 is disposed on the conductive top cover 21, the sealing portion 51 may be opposite to the liquid injection hole 23. Where, the thickness of the connecting portion 52 may be smaller than the thickness of the sealing portion 51, that is, the sealing member 50 is composed of the connecting portion 52 and the sealing portion 51, the sealing portion 51 protrudes from the connecting portion 52 and the connecting portion 52 is subjected to thinning process. Specifically, the thickness of the connecting portion 52 of the sealing member 50 may be less than 0.15 mm, and the thickness of the sealing portion 51 may be greater than or equal to 0.15 mm.

Referring to FIG. 8, when the sealing member 50 is connected to the conductive top cover 21 in a welding manner, the first welding seam 70 and the second welding seam 80 may be located on the connecting portion 52. Since the connecting portion 52 is thinned, the thickness of the connecting portion 52 is relatively thin, and the first welding seam 70 and the second welding seam 80 are formed on the connecting portion 52, in this way, the first welding seam 70 and the second welding seam 80 can be formed with less welding energy, so as to achieve the welding. This can further reduce the heat of the first welding seam 70 and the second welding seam 80, reduce heat accumulation of each welding seam, thereby effectively reducing or avoiding the occurrence of the situation of yellowing and bursting points at the overlapped portions of the head and tail ends of the first welding seam 70 and the second welding seam 80, and effectively improving the performance of the battery 100.

Where, the thickness of the sealing portion 51 may be 0.25 mm, that is, the thickness of the sealing portion 51 is relatively increased, this may reduce the height difference between the sealing portion 51 and the conductive top cover 21, and when an adapter tab or other structures are disposed on the sealing portion 51, the operation may be simple. The thickness of the connecting portion 52 may be 0.1 mm, this may further reduce the welding energy between the sealing member 50 and the conductive top cover 21, thereby reducing the heat of each welding seam.

It should be noted that the numerical value and the numerical value range involved in embodiments of the present application are approximate values, which may have a certain range of errors due to the influence of manufacturing processes, this kind of errors can be considered to be ignorable by persons of ordinary skill in the art.

The forming method of the battery provided in embodiments of the present application is described in detail below, and the forming method of the battery may include the following.

Firstly, the assembly of components such as the conductive shell 10, the battery cell 60, the cover plate 22, and the conductive top cover 21 should be completed, and after the assembly of the above-mentioned components is completed, the electrolyte solution can be injected into the chamber 11 through the liquid injection hole 23, and then the sealing member 50 is placed on the conductive top cover 21.

Where, the placement of the sealing member 50 may be implemented by an automated device, for example, the placement of the sealing member 50 may be implemented by using a mechanical arm. Specifically, the mechanical arm may be provided with a suction cup, and the sealing member 50 may be sucked by the suction cup and placed within the first recess portion 211 on the conductive top cover 21.

In addition, before the sealing member 50 is placed, in order to ensure the accuracy of the placement position, the conductive top cover 21 may be photographed by a detection element such as a CCD (Charge-Coupled Device) and the like to determine the position of the conductive top cover 21, and then the sealing member 50 is placed on the conductive top cover 21.

Secondly, after the sealing member 50 is placed, the first welding seam 70 can be formed on the sealing member 50, and can be cooled for a preset time. Specifically, the first welding seam 70 may be formed on the connecting portion 52 of the sealing member 50 by using a welding machine such as a laser welding machine, and after the first welding seam 70 is completed, there is an interval of a preset time, that is, the laser welding is stopped to make the first welding seam 70 sufficiently cooled.

Specifically, the preset time may be 0.5s -2s, this may make the first welding seam 70 effectively cooled by means of heat dissipation, thereby further reducing the situation that yellowing and bursting point appear at the head and tail ends of the first welding seam 70 and the second welding seam 80, and further improving the yield rate of the battery 100.

Where, before the first welding seam is formed, several welding spots may be first formed on the sealing member 50. That is, after the sealing member 50 is placed within the first recess portion 211, several preset welding spots may be first formed on the connecting portion 52 of the sealing member 50 by the welding machine, so as to preliminarily determine the position of the sealing member 50. After the preset welding spots are formed, the mechanical arm and the suction cup can be withdrawn, and then the first welding seam 70 is formed by the welding machine.

Finally, after stopping to wait a preset time, laser welding is performed again to form the second welding seam 80 on the sealing member 50, and the second head end 81 of the second welding seam 80 is connected to the first tail end 72 of the first welding seam 70, and the second tail end 82 of the second welding seam 80 is connected to the first head end 71 of the first welding seam 70, this may make the head and tail ends of the first welding seam 70 and the second welding seam 80 sequentially connected to form a closed welding seam, so that the sealing member 50 is welded on the conductive top cover 21 by the first welding seam 70 and the second welding seam 80 to form the above-mentioned battery 100.

In the description of the present invention, it is to be understood that the terms "center", "longitudinal", "transverse", "length", "width", "thickness", "up", "down", "front", "back", "left", "right", "vertical", "horizontal", "top", "bottom", "inside", "outside" etc. indicate the orientation or position relationship based on the orientation or position relationship shown in the accompanying drawings, only to facilitate the description of the present application and simplify the description, and not to indicate or imply that the device or component referred to must have a specific orientation, be constructed and operated in a specific orientation, and therefore cannot be interpreted as a limitation to the present invention.

In the description of the present invention, it is to be understood that the terms "including", "having", and any variations thereof as used herein, are intended to cover non-exclusive inclusion, for example, a process, a method, a system, a product, or a device that includes a series of steps or units is not necessarily limited to those steps or units clearly listed, but may include other steps or units not expressly listed or inherent to these process method, product, or device.

Unless otherwise expressly specified and limited, the terms "mounted", "linked", "connected", "fixed", etc. shall be understood in a broad sense, for example, the connection may be fixed connection, detachable connection, integrated connection, direct connection, indirect connection by an intermediate medium, interconnection between the interiors of two components, or an interaction relationship between two components. For persons of ordinary skill in the art, the specific meanings of the aforesaid terms in the present invention can be understood based on specific situations. In addition, the terms "first" and "second" are only used to describe purposes, and are not to be understood as indicating or implying relative importance, or implicitly specifying the number of the indicated technical features.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent substitutions to some or all technical features thereof, and these modifications or substitutions do not make the essence of corresponding technical solutions depart from the scope of the technical solutions of embodiments of the present invention.

## Claims

1. A battery, comprising a conductive shell (10) and a cover plate assembly (20), the cover plate assembly (20) is disposed on the conductive shell (10), the cover plate assembly (20) and the conductive shell (10) enclose to form a chamber (11), the cover plate assembly (20) or the conductive shell (10) is provided with a liquid injection hole (23) communicating with the chamber (11), and a sealing member (50) is disposed on the liquid injection hole (23) to seal the liquid injection hole (23);
a first welding seam (70) and a second welding seam (80) are formed on the sealing member (50) respectively, the first welding seam (70) has a first head end (71) and a first tail end (72), the second welding seam (80) has a second head end (81) and a second tail end (82), the first head end (71) is connected to the second tail end (82), the second head end (81) is connected to the first tail end (72), and the sealing member (50) is connected to the conductive shell (10) or the cover plate assembly (20) by the first welding seam (70) and the second welding seam (80).

2. The battery according to claim 1, wherein the cover plate assembly (20) comprises a conductive top cover (21) and a cover plate (22), the cover plate (22) is disposed on the conductive shell (10), the conductive top cover (21) is disposed on the cover plate (22) in an insulation manner, the liquid injection hole (23) is located in the conductive top cover (21), and the liquid injection hole (23) penetrates through the conductive top cover (21).

3. The battery according to claim 2, wherein a weld penetration depth of each of the first welding seam (70) and the second welding seam (80) is greater than a thickness of the sealing member (50) and less than a sum of the thickness of the sealing member (50) and a thickness of the conductive shell (10); or
the weld penetration depth of each of the first welding seam (70) and the second welding seam (80) is greater than the thickness of the sealing member (50) and less than the sum of the thickness of the sealing member (50) and the thickness of the conductive top cover (21).

4. The battery according to any one of claims 1-3, wherein each of the first welding seam (70) and the second welding seam (80) has a shape of circular arc, and the first welding seam (70) and the second welding seam (80) are concentrically disposed.

5. The battery according to claim 4, wherein the first head end (71) is partially overlapped with the second tail end (82), and/or the second head end (81) is partially overlapped with the first tail end (72).

6. The battery according to any one of claims 1-3, wherein the sealing member (50) comprises a sealing portion (51) and a connecting portion (52) disposed to surround an out periphery of the sealing portion (51), and the sealing portion (51) is opposite to the liquid injection hole (23);
a thickness of the connecting portion (52) is less than a thickness of the sealing portion (51), and the first welding seam (70) and the second welding seam (80) are located on the connecting portion (52).

7. The battery according to claim 4, wherein overlapped portions of the first tail end (72) and the second head end (81) have a central angle in a degree range from 0° to 30°; and/or
overlapped portions of the second tail end (82) and the first head end (71) have a central angle in a degree range from 0° to 30°.

8. The battery according to claim 4, wherein the first welding seam (70) has a central angle in a degree range from 180° to 240°; and/or the second welding seam (80) has a central angle in a degree range from 120° to 240°.

9. The battery according to claim 4, wherein the first welding seam (70) has an inner diameter in a range from 3.6 mm to 4 mm, and the first welding seam (70) has an outer diameter in a range from 4 mm to 4.4 mm; and/or
the second welding seam (80) has an inner diameter in a range from 3.6 mm to 4 mm, and the second welding seam (80) has an outer diameter in a range from 4 mm to 4.4 mm.

10. The battery according to claim 2, wherein a surface of the conductive top cover (21) facing away from the conductive shell (10) is provided with a first recess portion (211), and the sealing member (50) is located within the first recess portion (211).

11. The battery according to claim 10, wherein each of the first welding seam (70) and the second welding seam (80) has a protrusion on a surface of the sealing member (50) facing away from the conductive shell (10), and a vertex of the protrusion is lower than the surface of the conductive top cover (21) facing away from the conductive shell (10).

12. The battery according to claim 10, wherein a second recess portion (212) is further provided within the first recess portion (211), and the liquid injection hole (23) is located in the second recess portion (212).
